# EUROPÄISCHE PATENTSCHRIFT

(11) **EP 0 304 509 B1**
(45) Veröffentlichungstag und Bekanntmachung des Hinweises auf die Patenterteilung: **16.06.1993**
(21) Anmeldenummer: 87112520.9
(22) Anmeldetag: 28.08.1987
(51) Int. Cl.: G09G 1/16, B41B 27/00

(54) **Bildschirmgerät zur Textdarstellung**
Video display apparatus for textual information
Dispositif d'affichage vidéo pour la visualisation de textes

(43) Veröffentlichungstag der Anmeldung: 01.03.1989
(73) Patentinhaber: URW Software & Type GmbH, D-22399 Hamburg (DE)
(72) Erfinder: Karow, Peter, Dr., D-2000 Hamburg 65 (DE)
(74) Vertreter: UEXKÜLL & STOLBERG

(56) Entgegenhaltungen:
- EP-A- 0 132 456
- US-A- 3 978 470
- US-A- 4 586 036

## Beschreibung

Zum Erfassen von Texten und Zur schnellen direkten Wiedergabe der erfaßten Informationen zwecks umgehender Korrektur von Fehlern finden Bildschirmarbeitsplätze in zunehmendem Maße Verwendung. Auf die Arbeit mit den bekannten Bildschirmgeräten wirken sich verschiedene Mängel derselben nachteilig aus, vor allem weil für manche Korrekturen oft zeitraubende Versuchsreihen notwendig sind. Die verschiedenen Mängel der bekannten Bildschirmgeräte lassen sich dahingehend zusammenfassen, daß das typographische Erscheinungsbild des auf dem Bildschirm wiedergegebenen Textes in mehrfacher Hinsicht von dem endgültigen Druckbild abweicht, ganz gleich ob durch Laserprinter oder andere Setzmaschinen wie Laserfilmrecorder erzeugt.

Prinzipiell wäre zwar heute schon eine Textwiedergabe auf dem Bildschirm möglich, die mit dem endgültigen Druckbild besser übereinstimmt, als dies bis heute der Fall ist, doch geschieht dies in der Praxis - wenn überhaupt - recht selten, weil selbst sehr teure Systeme lediglich den Anspruch erfüllen, daß bei ihnen eine gewisse Ähnlichkeit zwischen Druckbild und Bildschirmdarstellung besteht. Doch auch bei diesen Systemen vermißt man die direkte schnelle Wiedergabe der Korrekturen auf den Bildschirmen.

Diese Diskrepanzen haben mehrere Ursachen. Zunächst zeigen die bekannten Bildschirmgeräte die Texte in einer dicktengleichen Bildschirmschrift, d.h. daß allen Buchstaben, Ziffern, Satzzeichen und Sonderzeichen des Alphabetes die gleiche Buchstabenbreite, üblicherweise 8 Bildschirmpunkte, zur Verfügung gestellt wird. Deshalb erscheint dort, wo ein in der Normalschrift z.B. Hevetica oder Times besonders schmaler Buchstabe wie z.B. i oder l vorkommt, ein relativ geringfügig ausgefüllter und bei einem in der Normalschrift besonders breiten Buchstaben wie w oder m ein übermäßig stark ausgefüllter Buchstabenplatz (Geviert). Im Gegensatz dazu schreiben die für die Herstellung des endgültigen Druckes verwendeten hochwertigen Drucker wie vor allem Laserdrucker "proportional", d.h. die jedem Buchstaben oder Satszeichen zur Verfügung gestellte Breite ist proportional der Breite dieses Zeichens in der Originalschrift. Daher erhalten die Zeilen im endgültigen Drucksatz ganz andere Längen als im dicktengleichen Bildschirmtext. Dies ist sehr störend.

Ein weiterer wichtiger Grund ist die Tatsache, daß die üblichen Bildschirmgeräte nur eine geringe Auflösung haben (72 lpi = lines per inch entsprechend 72 typographischen Punkten) im Gegensatz zum endgültigen Druckbild, das z.B. von Laserdruckern mit 300 lpi oder von Laserrecordern mit 1200 bis 2500 lpi erstellt wird.

Auch kommt es bei der Erstellung guter Textzeilen und -absätze sehr darauf an, daß man die Abstände der Buchstaben nicht zu groß werden läßt. Heute ist für die zur richtigen Einstellung nötige Korrektur eine Reihe langwieriger Versuche notwendig, weil man die Ergebnisse von Änderungen der Wortwahl oder anderem Satzaufbau nicht interaktiv am Bildschirm typographisch beurteilen kann.

Nicht ganz so schwerwiegend, aber immerhin störend ist auch die Tatsache, daß die bekannten Bildschirmgeräte die Buchstaben und Zeichen des Bildschirmtextes als starke Vereinfachung zeigen, man könnte beinahe das Wort Karikaturen gebrauchen. Zur Erklärung möge folgende Betrachtung dienen:
Man hat es im Rahmen lateinischer Schriften mit einer Vielfalt von mindestens 2000 verschiedenen Schriften zu tun, die sich oft zwar für den Laien nur gering, aber für den Drucker als Fachmann wesentlich unterscheiden (tatsächlich haben wir es mit etwa 16.000 verschiedenen Schriften inklusive schlechter und guter Kopien zu tun).

Die Drucker messen die Schriftgröße mit einer Maßeinheit von 0.351 mm, dem sogenannten typograhischen Punkt (p). 72 p entfallen demnach auf 1 inch. Im Buch- und Zeitungsdruck, aber auch im Büro mit Schreibmaschinen werden zu mehr als 90% Schriftgrößen von 9 - 10 Punkten (p) verwendet, was einer Großbuchstabenhöhe von 2.25 - 2.50 mm entspricht (= 2/3 des Textzeilenabstandes). Bildschirmgeräte können daher diese Schriftgrößen nur mit 9 bzw. 10 Fernsehzeilen darstellen, davon 6 Fernsehzeilen für die Großbuchstabenhöhe. In jeder Zeile stehen zur digitalen Darstellung sogenannte Bildpunkte zur Verfügung, die dadurch entstehen, daß elektronisch nur in bestimmten Zeitabständen auf die Darstellung eines geänderten Helligkeitswertes umgeschaltet werden kann. Hierfür sind meist nur zwei Helligkeitswerte in Verwendung, nämlich schwarz und weiß, die sogenannte Bildmapdarstellung. Die Länge dieser Bildpunkte entspricht üblicherweise dem Fernseh-Zeilenabstand, so daß man es mit sogenannten "quadratischen" Bildpunkten zu tun hat. Will man nun Buchstaben für Bildschirme in 9 p Größe darstellen, muß man sie mit 9 x 9 Punkten rastern für das Geviert, das quadratisch und so hoch ist wie der Textzeilenabstand. Nun kann man aber mit 9 x 9 schwarzweißen Bildpunkten die Vielfalt von 2.000 Schriften auch nicht annähernd darstellen, sondern lediglich stark vereinfachend etwa 3 gerade und 3 kursive (schräge) Schrifttypen unterscheidbar machen. Unterhalb von 6 x 6 Bildpunkten gelingt überhaupt keine Darstellung, bei 6 x 6 Bildpunkten für das Geviert 1 gerade und 1 kursive Darstellung, bei 12 x 12 Bildpunkten etwa 5 und 5, bei 18 x 18 Bildpunkten etwa 10 und 10, bei 27 x 27 Bildpunkten etwa 100 gerade und 100 kursive, bei 36 x 36 Bildpunkten bereits 500 gerade und 500 kursive Schriften.

Um die Qualität der auf dem Bildschirm dargestellten Schriftzeichen zu verbessern, sind auch Vorschläge bekannt geworden, Bildschirmpunkte mit einem Informationsgehalt von mehr als 1 bit zu verwenden d.h. solche mit mehr als 2 Helligkeitsstufen oder Farben je Bildpunkt. So ist z.B. in der Europäischen Patentanmeldung EP-A-0 132 456 ein Verfahren beschrieben, nach dem an die Stelle eines von n übereinanderliegenden Zeilen bestehend aus je m aufeinander folgenden Bildpunkten gebildeten Rechteckes ein einziges "Überpixel" mit einem Grauwert entsprechend dem Durchschnitt der das Rechteck bildenden m x n Einzelpixel gesetzt wird.

Auch die Europäische Patentanmeldung EP-A-0 215 664 beschreibt ein Verfahren und eine Vorrichtung zur Speicherung und Darstellung von Schriftzeichen auf dem Bildschirm unter Verwendung von Bildpunkten mit mehr als zwei Helligkeits- oder Farbwerten, d.h. mit einem Informationsgehalt von mehr als 1 bit je Bildpunkt. Die Grunddarstellung von Buchstaben wird im Rahmen dieser Veröffentlichung nur dazu benutzt, die Schwarzweißübergänge an den Konturen von Buchstaben besser darzustellen, indem der sogenannte "Sägezahneffekt" vermieden wird (antialiasing).

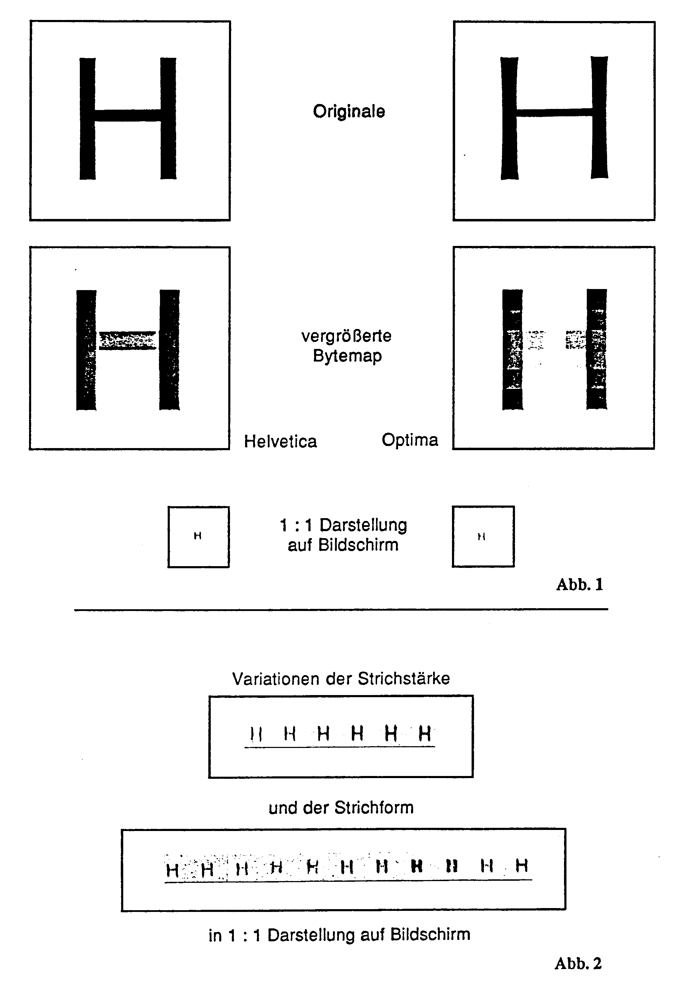

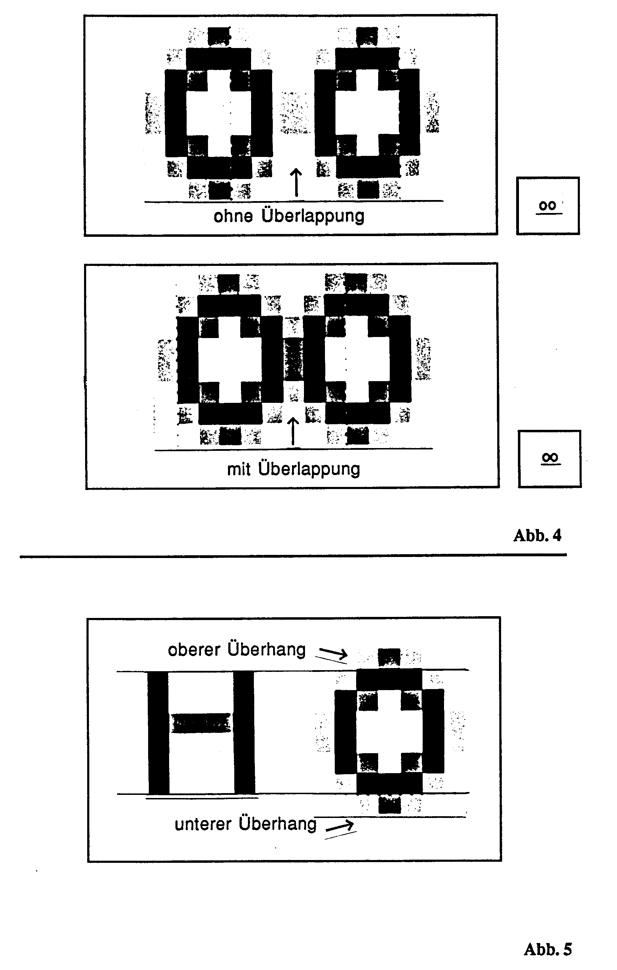

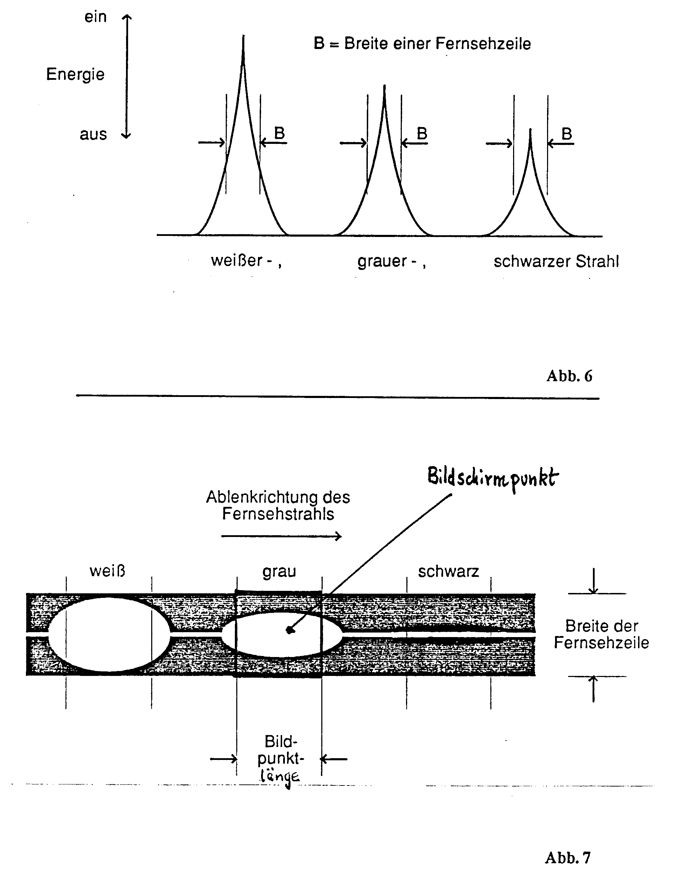

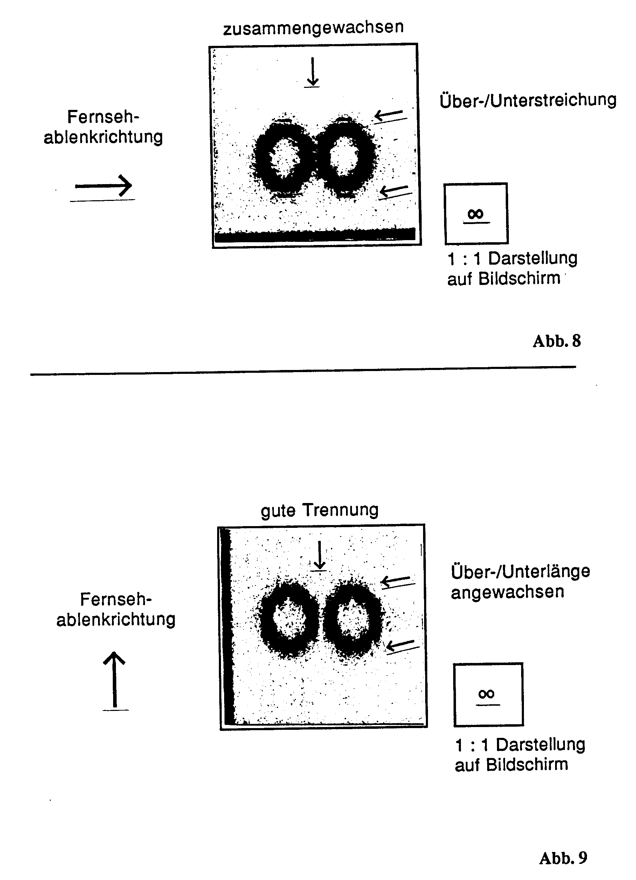

Die vorliegende Erfindung betrifft weitere Verbesserungen der Bildschirmdarstellung, die durch neuartige Anwendung der Maßnahme, die Buchstabenmatrizen mit Bildpunkten verschiedener Grauwerte darzustellen, erzielt werden können, u.zw. die folgenden:
1. Vor allem wird ermöglicht, die Buchstaben und Zeichen in der Zeile so aneinander zu reihen, daß sich die Buchstaben um einen Bildschirmpunkt überlappen, also die letzte Spalte von Graupunkten des Vorgängers mit der ersten Spalte von Graupunkten des Nachfolgers überlagert wird. Dabei werden die Helligkeitswerte addiert. Dadurch können die Buchstaben noch enger aneinander gerückt werden, ohne im Gegensatz zur reinen Schwarzweiß-Darstellung zu verschmelzen. Abbildung 4 zeigt in vergrößerter Form die Buchstabenkombination "00" ohne und mit Überlappung. Man erkennt, daß zum Beispiel bei einem 9 x 9 Halbbyteraster ohne Überlappung die beiden "0"s nicht so eng aneinander gereiht werden können wie typographisch notwendig. Erst die Überlappung erzeugt den gewünschten engen Satz. So hat man z.B. bei einer 9 x 9 Halbbyterasterung immer noch 36 verschiedene Buchstabenbreiten, wenn man annimmt, daß man mindestens 4 gut unterscheidbare Graustufen bis zum Grauton 8 (Mitte) der Grauskala hat. Weiter als bis 8 darf man wegen der Überlappung und damit verbundener Addition der Helligkeitswerte nicht mehr gehen.
2. Außerdem ist es erfindungsgemäß möglich, verschiedene Strichstärken des Originals durch verschiedene Helligkeitswerte des Bildschirmbildes nachzuahmen, da ein grauer Strich optisch schmaler als ein schwarzer wirkt.
   Die Speicherung der Buchstabenmatrix erfolgt nicht wie üblich mit 9 x 9 Bits für z.B. 9 p Schriftgröße, sondern mit mehr Information pro Zeichen, nämlich mit mindestens 2 Bit je Bildpunkt und bei der vorzugsweisen Ausführung mit 4 Bit in 16 Helligkeitsstufen pro Bildunkt, d.h. mit 9 x 9 Halbbytes je Buchstaben. Abbildung 1 zeigt, daß damit bereits feine Unterschiede bei der Strichgestaltung zwischen einem "H" aus den Schriften Helvetica und Optima wiedergegeben werden können. Auch kann die Strichstärke durch verschiedene Grautönungen variiert werden (siehe Unterschied zwischen Abbildung 1 und Abbildung 2, welche den Buchstaben der Schrift Helvetica zeigt). Grundsätzlich kann man feststellen, daß 16 Graustufen der Helligkeitsvielfalt von 4 x 4 Bits nahezu ganz wiedergeben, wenn diese zur Darstellung von 4 x 4 entweder schwarzen oder weißen Bildpunkten auf z.B. Laserdruckern dienen; denn mit 16 Bildpunkten lassen sich 17 verschiedene Grautöne für die summarische Betrachtung des Gesamtgebietes von 4 x 4 Druckerpunkten erzeugen.
   9 x 9 Graupunkte können daher 36 x 36 Schwarzweißbildpunkte (Laserprinter) qualitativ wiedergeben. Man kann also ersehen, daß die 36 x 36 Punkten entsprechende Schriftvielfalt qualitativ schon mit 9 x 9 Graupunkten wiedergegeben werden kann (entsprechend 500 Schriften aus 2000). Zur Darstellung der verschiedenen in der Druckindustrie häufig benutzten Punktgrößen (6 p bis 32 p) sollte vorzugsweise eine Rasterserie von 6 x 6 bis 32 x 32 Bildschirmpunkten für die entsprechenden Gevierte pro Schrifttype verfügbar gemacht werden. Diesen Serien können dann die Punktgrößen für Laserprinter oder Filmrecorder entsprechend angepaßt werden.
3. Ein weiterer Vorteil der Verwendung verschiedener Helligkeitsstufen besteht darin, daß man durch verschieden starke Graufärbung links und rechts bei gleicher Gesamtbreite (Dickte) den Buchstaben ein breiteres (dunkleres) oder schmaleres (helleres) Aussehen geben kann.

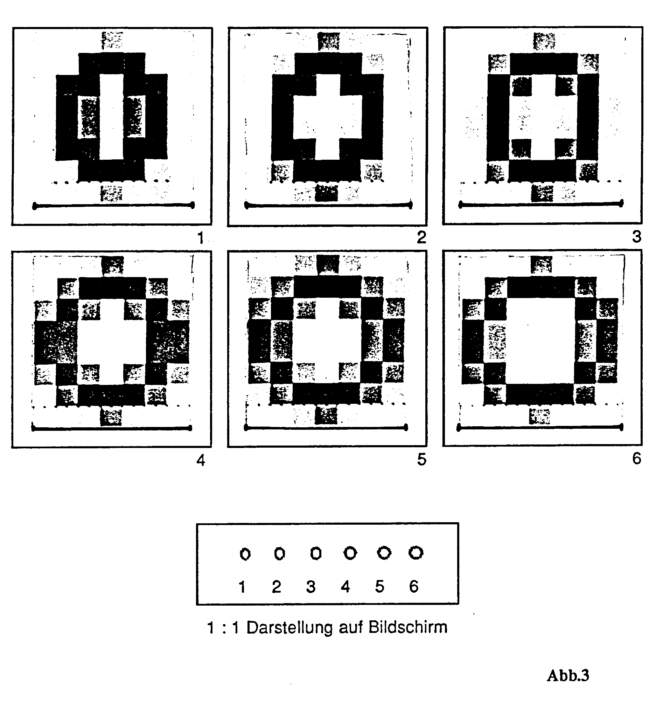

   Abbildung 3 zeigt den Buchstaben "0" in einem 9 x 9 Raster (= 6 Bildschirmpunkte Großbuchstabenhöhe) in verschiedenen Darstellungen. Er ist 7 Bildschirmpunkte breit. Durch stärkere Grautönung links und rechts wirkt er zunehmend breiter.
   Also hat man beispielsweise in einem 9 x 9 Halbbyteraster nicht nur 9, sondern die 36 verschiedenen Buchstabenbreiten zur Verfügung, die der Laserdrucker drucken kann. In Abbildung 3 werden beispielsweise nur 6 der möglichen Breitenvarianten bei einer Buchstabenbreite von 7 Bildschirmpunkten gezeigt.
4. Weiter kann man durch Grautönung auch eine Darstellung der Überhänge der Buchstaben erreichen. Unter "Überhang" versteht man die Maßnahme, runde Buchstaben um eine Kleinigkeit, den sogenannten Überhang, oben und unter größer darzustellen als gerade Buchstaben, weil sie nur dann optisch den Eindruck gleicher Größe erwecken (vgl. diesbezüglich P.Karow, "Digitale Speicherung von Schriften", URW Verlag Hamburg Nr. 1 7/86, Seite 132 ff). Nur mit einer Vergrößerung von etw 3%, d.h. je 1.5% oben und unten, wirkt zum Beispiel ein 0 ebenso groß wie ein H.
   Abbildung 5 zeigt Originale für die Buchstaben H und 0. Gemäß der bevorzugten Ausgestaltung der Erfindung, die Pixel statt als Bits als Halbbytes zu speichern, kann jedes Pixel 16 Helligkeitswerte annehmen. Bei einem 9 x 9 Halbbyteraster ist die Großbuchstabenhöhe 6 Punkte, 1.5% von 6 Punkten ist: 1.5 x 6/100 = 1/10 Punkt. Einen 1/10 Punkt kann man etwa mit 2 Graustufen darstellen, nämlich mit etwa 1/8 des verfügbaren Helligkeitsspektrums. Die Abbildung 5 zeigt "0"s mit grau dargestellten Überhängen.
5. Eine weitere vorzugsweise Ausgestaltung der Erfindung, die ebenfalls nur mit einem Bildschirmgerät durchführbar ist, das Pixel verschiedener Helligkeitsstufen darzustellen gestattet, und eine bisher unerreichte erhebliche weitere Verbesserung der Bildqualität von Texten erbringt ganz ohne zusätzlichen technischen und/oder wirschaftlichen Aufwand, beruht auf einer unkonventionellen Anwendung von Detailkenntnissen über die Art und Weise, wie Bildpunkte verschiedener Helligkeitswerte auf Schwarzweißbildschirmen erzeugt werden.
   Der Elektronenstrahl der Fernsehröhre hat ein bestimmtes Strahlprofil. Dieses ist in Grenzen durch elektromagnetische Maßnahmen beeinflußbar. Im wesentlichen gilt immer, daß man in dem Mitte die meiste Energie und nach außen hin exponentiell abfallend weniger Energie hat. Abbildung 6 gibt eine Darstellung davon. Weiße Punkte werden mit voller Strahlenergie, graue mit weniger und schwarze mit verschwindender Strahlenergie erzeugt. Dort, wo der Strahl auf den Schwarzweißbildschirm trifft, entstehen verschieden große weiße Flecken, die sogenannten Fernsehbildpunkte. Sie sind in ihrer Form länglich und haben die größere Ausdehnung in Fernsehzeilenrichtung.
   Abbildung 7 zeigt das Aussehen von weißen, grauen und schwarzen Bildschirmpunkten.
   Die nachträglich verblüffend einfach erscheinende Maßnahme, die erfindungsgemäß aus dieser Kenntnis abgeleitet wird, besteht darin, die Zeilenrichtung des Bildschirmes gegenüber der bisher allgemein sowohl für den normalen Konsum als auch in der EDV ausnahmslos übichen Horizontalrichtung um 90 Grad zu drehen, die Bildzeile also vertikal und damit rechtwinklig zur Schriftzeile anstatt wie bisher horizontal und damit parallel zur Schriftzeile verlaufen zu lassen. Praktisch bedeutet das, die Fernsehröhre gegenüber der üblichen Anordnung um 90 Grad zu drehen.
5.1 Diese Maßnahme wirkt sich sehr positiv auf die verfeinerte Darstellung des Buchstabenzwischenraumes aus, der bei einem 9 x 9 Halbbyteraster oft nur noch ein Viertel- oder Halbpixel ist und ohne Grau gar nicht darstellbar ist.
5.2 Ferner wirkt sich die 90 Grad-Drehung der Ablenkrichtung günstig auf die Darstellung der Überhänge aus, wie ein Vergleich der Abbildungen 8 und 9 zeigt, die beide das Buchstabenpaar "00" zeigen, wobei in beiden Fällen die Grauwerte der Abbildung 4 als Ausgangspunkt dienen, jedoch mit unterschiedlicher Fernsehzeilenablenkung.
   In Abbildung 8 ist die Fernsehzeilenablenkung horizontal und damit parallel zur Schriftrichtung. Man erkennt, daß
   a) die Buchstaben störend zusammenwachsen,
   b) der Überhang durch die Graudarstellung zu einer unschönen Über- bzw. Unterstreichung entartet.
   In Abbildung 9 ist dagegen die Fersehzeilenablenkung vertikal und damit rechtwinklig zu den Schriftzeilen. Man erkennt, daß
   a) die Buchstaben gut getrennt sind, und
   b) die Übergänge nicht zu Über- bzw. Unterstreichungen entarten, sondern sinnvoll mit dem Buchstaben zusammenwachsen.

### Ausführungsbeispiel

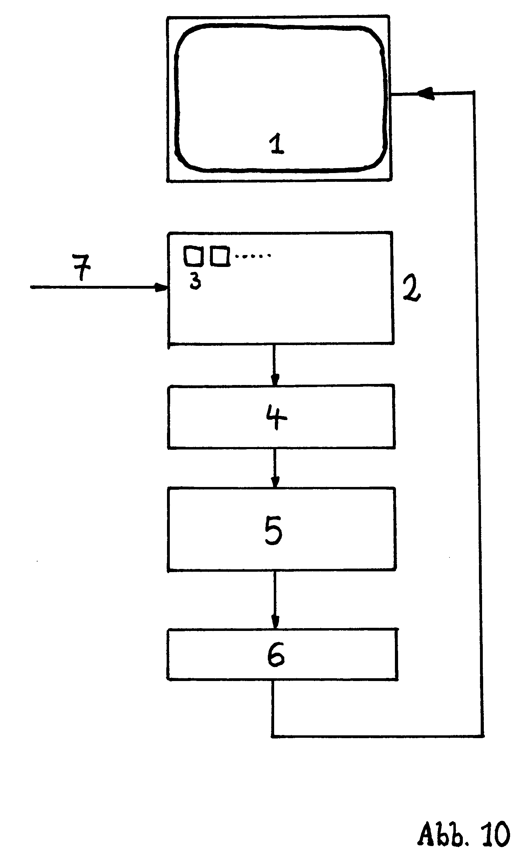

Das nachstehende Ausführungsbeispiel verkörpert mehrere Ausführungsformen der Erfindung. Abbildung 10 zeigt schematisch den Aufbau des erfindungsgemäßen Bildschirmgerätes. 1 ist der Bildschirm, dessen Fernsehzeilen senkrecht verlaufen. 2 ist ein Matrizenspeicher mit den Matrizen 3, von denen beispielsweise nur zwei eingezeichnet sind. 4 ist die Leseelektronik, welche entsprechend dem über die Eingabe 7 aufgegebenen Text die einzelnen Matrizen dem Matrizenspeicher 2 entnimmt und dem Bildwiederholspeicher 5 einspeist. 6 ist der mit dem Bildwiederholspeicher 5 verbundene Videocontroller, der dem Bildschirm 1 die Videosignale übermittelt.

### A. Herstellung der Buchstaben- und Zeichenmatrizen

Die Herstellung der für das proportionale Schreiben bestimmten Buchstaben- und Zeichenmatrizen, nachstehend kurz Buchstabenmatrizen genannt, erfolgt in grundsätzlich bekannter Weise durch Entwerfen auf dem Bildschirm und Digitalisieren. Letzteres erfolgt jedoch erfindungsgemäß für ein Grauraster von 6 x 6 für 6 p bis 32 x 32 Graupunkten für 32 p, als Halbbytes z.B. in EP-ROM's speicherbar, also mit Grundrastern, die zwar nicht so fein sind wie die von Laserdruckern (viermal feiner oder mehr, z.B. 24 x 24 Druckerpunkte für 6 p bis 128 x 128 Druckerpunkte für 32 p), aber dank der Helligkeitsstufen doch Feinheiten guter Buchstabengestaltung erlauben.
Bei einem Bildschirm von 1000 x 1000 Punkten kann man z.B. mit 9 x 9 Raster etwa 110 Textzeilen mit etwa 220 Zeichen pro Zeile darstellen. Dies ist mehr als eine DIN A4-Seite faßt (96 Zeilen zu 128 Zeichen). Dabei ist berücksichtigt, daß beim proportionalen Schreiben die Buchstaben und Zeichen im Mittel nur die Hälfte der maximal zulässigen Graupunktzahl breit sind.

### Herstellung des Bildwiederholspeichers

Die Elektronik entnimmt den nach A. hergestellten EPROM-Speichern die Matrizen der Buchstaben und Zeichen und setzt sie gemäß der Textgestaltung in den Bildwiederholspeicher ein, vorzugsweise um einen Bildpunkt in der Textzeilenrichtung überlappend.

### C. Herstellung des Textes auf dem Bildschirm

Der Bildwiederholspeicher wird ausgelesen, und zwar nicht wie üblich in x-, sondern in y-Richtung. Alle etwa 1000 Halbbytes einer Spalte werden zusammengefaßt als vertikale Zeile und in entsprechende Amplituden des Videosignals gewandelt. Diese Fernsehsignale werden Zeile um Zeile von links nach rechts fortschreitend an den Fernsehbildschirm gegeben, der seine Ablenkrichtung für die Fernsehzeilen senkrecht hat.

## Patentansprüche

1. Verfahren zur Bildschirmdarstellung mit Bildwiederholspeicher für das Setzen, Korrigieren und die Darstellung von für den elektronischen Druck bestimmten Texten aus einem aus Graumatrizen mit Bildpunkten verschiedener Helligkeit bestehenden Font, dadurch gekennzeichnet, daß die Matrizen entsprechend der Textgestaltung in den Bildwiederholspeicher um mindestens einen Bildschirmpunkt überlappend in Textzeilenrichtung einkopiert werden.

2. Bildschirmgerät für die Durchführung des Verfahrens nach Anspruch 1 enthaltend einen Fernsehbildschirm (1), einen Matrizenspeicher (2) für die Matrizen (3) der Buchstaben und Satzzeichen sowie eine Leseelektronik (4), welche dem Matrizenspeicher (2) die einzelnen Matrizen entsprechend dem über die Eingabe (7) aufgegebenen Text zu entnehmen und in einen mit einem Videocontroller (6) verbundenen Bildwiederholspeicher (5) einzukopieren in der Lage ist, dadurch gekennzeichnet, daß die Buchstabenmatrizen die Bildpunkte als Halbbytes gespeichert enthalten.

3. Bildschirmgerät nach dem Anspruch 2, dadurch gekennzeichnet, daß die Bchstabenmatrizen 6 x 6 bis 36 x 36 Halbbytes je Matrize enthalten zur Darstellung von 6 bis 36 Punkt großen Schriften.

4. Bildschirmgerät nach den Ansprüchen 2 und 3, dadurch gekennzeichnet, daß die Ablenkrichtung des Bildschirmes rechtwinklig zur Schreibrichtung und damit vertikal verläuft.

5. Verfahren zum Betrieb des Bildschirmgerätes nach den Ansprüchen 2 bis 4, dadurch gekennzeichnet, daß alle Pixel einer Spalte des Bildwiederholspeichers als vertikale Fernsehzeile zusammengefaßt und in entsprechende Amplituden des Videosignals umgewandelt werden.

## Claims

1. A method of display on a television screen having video refresh memory for setting, correcting and representing texts intended for electronic printing from a font consisting of grey matrices with image dots of varying brightness, characterized in that the matrices corresponding with the shape of the text are copied into the image repeater stores with an overlap by at least one screen dot in the direction of the lines of text.

2. A television screen apparatus for the performance of the method as in Claim 1, which contains one television screen (1), one matrix store (2) for the matrices (3) of the characters and punctuation marks as well as electronic equipment (4) which reads from the matrix store (2) the individual matrices corresponding with the text being delivered via the input (7) and to copy them into a video refresh memory (5) connected to a video controller (6), characterized in that the character matrices contain the image dots stored as half-bytes.

3. A television screen apparatus as in Claim 2, characterized in that the character matrices contain 6 x 6 to 36 x 36 half-bytes per matrix for the representation of characters in point sizes from 6 to 36 pt.

4. A television screen apparatus as in Claims 2 and 3, characterized in that the sweep direction of the screen runs at right angles to the direction of writing and thereby vertically.

5. A method of operation of the television screen apparatus as in Claims 2 to 4 characterized in that all of the pixels of one column of the video refresh memory are combined as vertical television lines and converted into corresponding amplitudes of the video signal.

## Revendications

1. Procédé de représentation à l'écran avec mémoire de reproduction d'image pour la composition, la correction et l'affichage de textes destinés à l'impression électronique à partir d'une matrice de gris avec une police constituée de pixels de luminosités diverses, caractérisé en ce eue les matrices correspondant à la formation du texte sont copiées dans la mémoire de reproduction d'image avec un chevauchement d'au moins un pixel d'écran dans l'agencement des lignes de texte.

2. Appareil à écran pour la mise en oeuvre du procédé selon la revendication 1 comprenant un écran cathodique (1), une mémoire de matrices (2) pour les matrices (3) de lettres et de signes ainsi qu'une électronique de lecture (4) qui est en mesure de prélever dans la mémoire de matrices (2) les matrices individuelles correspondant au texte introduit par l'organe d'entrée (7) et de les copier dans une mémoire de reproduction d'image reliée à un dispositif de commande vidéographique (6), caractérisé en ce que les matrices de lettres contiennent les pixels stockés sous forme de demi-octets.

3. Appareil à écran selon la revendication 2, caractérisé en ce que les matrices de caractères comprennent 6 x 6 jusqu'à 36 x 36 demi-octets par matrice pour la représentation de polices des corps de 6 à 36 p.

4. Appareil à écran selon les revendications 2 et 3, caractérisé en ce que le sens de déviation de l'écran est perpendiculaire au sens de l'écriture et se déplace donc verticalement.

5. Procédé pour l'utilisation de l'appareil à écran selon l'une quelconque des revendication 2 à 4, dans lequel tous les pixels d'une colonne de la mémoire de reproduction d'image sont assemblés comme lignes de balayage verticales et sont convertis en des amplitudes correspondantes du signal vidéographique.
